Europäisches Patentamt

European Patent Office

Office européen des brevets

(11) Numéro de publication : **0 376 815 B1**

# (12) FASCICULE DE BREVET EUROPEEN

(45) Date de publication du fascicule du brevet :
**11.03.92 Bulletin 92/11**

(51) Int. Cl.⁵ : **F01M 3/00,** F04B 7/04,
F16N 13/06

(21) Numéro de dépôt : **89403606.0**

(22) Date de dépôt : **21.12.89**

(54) **Pompe à faible débit notamment pour le graissage d'un moteur à deux temps.**

(30) Priorité : **30.12.88 FR 8817530**

(43) Date de publication de la demande :
**04.07.90 Bulletin 90/27**

(45) Mention de la délivrance du brevet :
**11.03.92 Bulletin 92/11**

(84) Etats contractants désignés :
**BE ES FR IT**

(56) Documents cités :
**DE-A- 3 212 334
FR-A- 763 663
FR-A- 1 014 529**

(56) Documents cités :
**FR-A- 2 120 945
GB-A- 993 390
GB-A- 1 292 630
GB-A- 2 181 493**

(73) Titulaire : **PEUGEOT MOTOCYCLES
Rue du 17 Novembre
F-25350 Beaulieu Mandeure (FR)**

(72) Inventeur : **Perrin, Marc
9, rue de la Belle Alise Blamont
F-25310 Herimoncourt (FR)**

(74) Mandataire : **Jacobson, Claude et al
Cabinet Lavoix 2, Place d'Estienne d'Orves
F-75441 Paris Cedex 09 (FR)**

EP 0 376 815 B1

# Description

La présente invention est relative à une pompe à faible débit, notamment pour le graissage d'un moteur à deux temps, du type comprenant : un corps cylindrique creux ayant deux orifices latéraux espacés axialement, respectivement d'aspiration et de refoulement ; à l'intérieur de ce corps, un tiroir de distributeur et un piston cylindrique monté dans ce tiroir, le tiroir et le piston ménageant entre eux une chambre de pompage et étant mobiles en va-et-vient par rapport au corps et l'un par rapport à l'autre, le corps comportant des butées d'arrêt du piston dans deux positions extrêmes qui sont séparées par une distance inférieure à la course du tiroir ; et des moyens d'actionnement du tiroir.

Dans une pompe connue de ce type (FR-A-1 014 529), le tiroir est solidaire en permanence de son organe d'actionnement, qui en définit les fins de course.

Avec une telle conception, la cylindrée de la pompe manque de précision, car elle dépend de nombreuses tolérances de fabrication difficiles à contrôler.

La présente invention a pour but de remédier à cet inconvénient en fournissant une pompe dont la cylindrée puisse être définie de façon précise à faible coût.

A cet effet, l'invention a pour objet une pompe du type précité, caractérisée en ce que les fins de course du tiroir sont définies par la butée de ce tiroir d'une part contre une surface solidaire du corps, et d'autre part contre un élément solidaire du piston.

Une telle pompe peut fonctionner aussi bien à l'air libre que dans un milieu visqueux. Elle est peu encombrante et peut être facilement disposée en tout point approprié, notamment pour assurer le graissage d'un moteur à deux temps.

Selon un mode de réalisation, le tiroir est en simple appui, à son extrémité opposée au piston, contre un organe d'actionnement vers lequel il est sollicité par un ressort.

Le tiroir peut notamment être en contact, à son extrémité opposée au piston, avec le noyau d'un électro-aimant agissant à l'encontre d'un ressort de rappel.

La description ci-dessous d'un mode de réalisation, donné à titre d'exemple non limitatif et représenté aux dessins annexés, fera d'ailleurs ressortir les avantages de l'invention.

Sur ces dessins :

La Fig. 1 est une vue en coupe longitudinale d'une pompe selon l'invention en position d'aspiration.

La Fig. 2 est une vue analogue à la Fig. 1 montrant la pompe en position de refoulement.

La Fig. 3 est une vue de côté d'une variante de réalisation de la pompe.

La Fig. 4 est une vue en coupe suivant la ligne 4-4 de la Fig. 3.

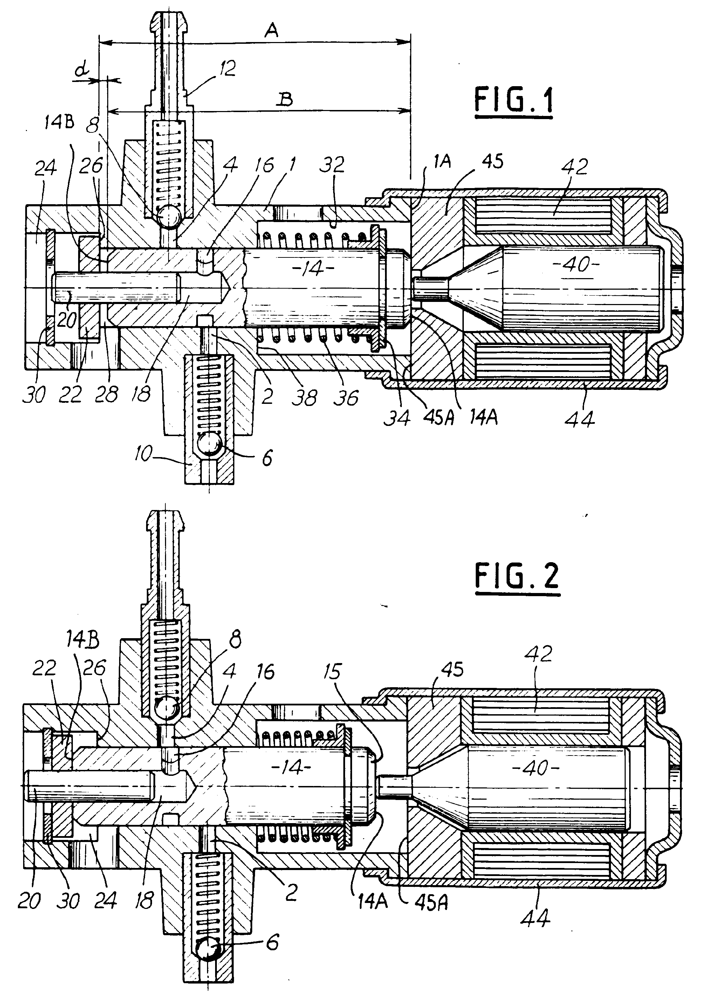

Comme le montrent les dessins, une pompe selon l'invention comporte un corps creux cylindrique 1 qui est percé de deux orifices latéraux, espacés axialement, 2 et 4, respectivement d'aspiration et de refoulement, qui sont munis chacun d'un clapet antiretour 6, 8. Le clapet anti-retour 6 est monté à l'intérieur d'un embout 10 qui relie l'orifice d'aspiration 2 à une source de fluide (non représentée) et ce clapet tend à interdire le retour du fluide de l'orifice d'aspiration 2 à cette source. Le clapet anti-retour 8 est monté dans un embout 12 de liaison à une conduite d'utilisation et tend par suite à interdire le retour du fluide de cette canalisation vers l'orifice de refoulement 4. Le corps 1 se termine vers la droite (en considérant la Fig. 1) par une face plane et radiale 1A.

A l'intérieur du corps 1 est monté coulissant un tiroir cylindrique 14 ayant une gorge périphérique 16 et deux faces d'extrémité planes et radiales 14A et 14B. Le tiroir 14 comporte également un évidement ou alésage interne borgne 18 ouvert à son extrémité gauche et recevant un piston cylindrique 20 qui ferme l'alésage et délimite ainsi avec lui une chambre de pompage 18 en communication avec la gorge périphérique 16.

A l'extérieur du tiroir cylindrique 14, le piston 20 fait saillie et porte une collerette 22 qui en est solidaire. Cette collerette est logée dans une partie élargie 24 de la cavité interne du corps 1 et peut ainsi venir en butée contre un épaulement 26 formé à la jonction de cette partie élargie 24 et de la partie plus étroite 28 contenant le tiroir 14. Une bague 30 fixée dans la paroi de la cavité 24 forme une seconde butée radiale à l'intérieur de cette cavité 24 et limite le déplacement de la collerette 22 vers l'extérieur.

A l'extrémité opposée à la cavité 24, le corps 1 comporte une autre cavité de grand diamètre 32 à l'intérieur de laquelle le tiroir cylindrique 14 se prolonge et porte une bride 34 sur laquelle appuie l'extrémité d'un ressort hélicoidal de rappel 36, également en appui sur l'épaulement 38 formé par le fond de la cavité 32. Le ressort 36 tend ainsi à éloigner la bride 34 des orifices 2 et 4.

Au delà de la bride 34, l'extrémité 15 du tiroir cylindrique 14, et plus particulièrement sa face 14A, est en contact par simple appui avec le noyau 40 d'un électro-aimant 42 monté dans un boitier 44 qui est fixé à l'extrémité du corps 1 de la pompe. Le boîtier 44 comporte une pièce de butée 45 qui s'appuie par une face plane et radiale 45A contre la face 1A du corps 1.

Dans la position représentée sur la Fig. 1, c'est-à-dire lorsque l'électro-aimant 42 n'est pas excité, le noyau 40 est en retrait à l'intérieur du boitier 44 et le ressort 36 est libre de repousser la bride 34 et par suite le tiroir 14 en direction de ce boitier, c'est-à-dire vers la droite en regardant les figures, jusqu'à appui du tiroir contre la face 45A du boîtier 44. Dans cette position, le noyau ne bute pas contre la paroi d'extrémité droite ajourée 44A du boîtier 44, et la gorge périphérique 16 se trouve pratiquement en face de l'orifice d'aspiration 2, de sorte que le fluide provenant de la source, par exemple d'un réservoir, peut pénétrer dans la gorge 16 et par suite dans la chambre 18. Par contre, aucune communication n'est établie entre la gorge 16 et l'orifice d'échappement 4 et le clapet 8 est fermé.

Lorsque l'électro-aimant 42 est excité, le noyau 40 repousse le tiroir 14, vers la gauche en considérant les dessins, contre l'action du ressort 36. Le cylindre 14 se déplace dans le corps 1 tandis que le clapet 6 se ferme et interdit ainsi tout retour du fluide contenu dans la chambre 18 vers le réservoir. Comme ce fluide est incompressible, en se déplaçant, le tiroir 14 entraîne le piston 20 jusqu'au moment où la collerette 22 rencontre la butée 30, ce qui arrête le piston 20 (Fig.2) alors que la gorge 16 arrive au niveau de l'orifice d'échappement 4. Le noyau 40 continuant à agir, le piston 14 effectue une course supplémentaire qui le déplace à la fois par rapport au corps 1 et par rapport au piston 20 et place progressivement la gorge 16 en regard de l'orifice 4. Au cours de ce déplacement, le volume de la chambre de pompage 18 a diminué peu à peu et le fluide qu'elle contenait a été refoulé à travers la gorge 16, l'orifice d'échappement 4, le clapet 8 et l'embout 12.

Lorsque le tiroir 14 arrive en fin de course (Fig. 2), en butée contre la collerette 22, la chambre 18 a atteint son volume minimal et la quantité de fluide désirée a été refoulée par l'orifice 4. L'électro-aimant 42 cesse alors d'être excité et le noyau 40 d'exercer un effort sur le tiroir 14. Ce dernier est aussitôt repoussé vers la droite, en considérant la figure, par le ressort 36, ce qui écarte la gorge 16 de l'orifice d'échappement 4, provoque la fermeture du clapet 8 et contraint le piston 20 à reculer également en direction de l'épaulement 26 du fait de l'inextensibilité du fluide contenu dans la chambre 18.

La collerette 22 du piston 20 vient en butée contre cet épaulement 26 au moment où la gorge périphérique 16 entre en communication avec l'orifice d'aspiration 2. Le ressort 36 oblige toutefois le tiroir 14 à effectuer une faible course supplémentaire $d$ (Fig. 1) jusqu'à venue du tiroir en butée contre la face 45A du boîtier 44. Ceci amène la gorge 16 et l'orifice 2 en face l'un de l'autre et permet l'aspiration du fluide contenu dans le réservoir à l'intérieur de la chambre de pompage par accroîssement du volume de cette dernière. Lorsque le volume maximal de cette chambre est atteint, l'électro-aimant 42 et le noyau 40 entrent à nouveau en action pour un déplacement en sens inverse du tiroir 14 et du piston 20, c'est-à- dire une nouvelle phase de refoulement.

On obtient ainsi un pompage régulier et constant avec une pompe qui est simple à réaliser et peut être placée en tout point approprié du dispositif. Une telle pompe peut notamment être montée à l'intérieur même du réservoir de fluide et notamment du réservoir contenant l'huile de graissage d'un moteur à deux temps.

Il est à noter que la distance $d$ précitée représente le déplacement relatif du piston par rapport au tiroir, déplacement qui, multiplié par la section droite de l'alésage 18, définit la cylindrée de la pompe, c'est-à-dire le volume de fluide transféré à chaque cycle.

Sur la figure 1, on voit que cette distance $d$ est égale à la différence entre deux cotes A et B, où la cote A est la cote mesurée sur le corps de pompe 1 entre l'épaulement d'appui 26 et la face d'extrémité droite 1A du corps 1, tandis que la cote B est la cote de longueur du tiroir 14.

On sait d'autre part que la tolérance sur une cote est égale à la somme des tolérances des cotes dont elle découle. La tolérance sur la cote $d$, c'est-à-dire sur la course relative du piston, est donc la somme des tolérances des cotes A et B, lesquelles sont très faciles à obtenir avec une grande précision.

Il résulte de ces considérations que l'on obtient facilement une grande précision sur la cylindrée de la pompe.

Par ailleurs, comme indiqué plus haut, le caractère incompressible et inextensible du fluide garantit un blocage, dans les deux sens, du piston par rapport au tiroir malgré les effets de l'inertie (la fréquence est de l'ordre de 1 coup pour 100 tours de moteur) ; compte tenu de la fréquence de fonctionnement, aucun dispositif d'étanchéité n'est nécessaire entre le piston et l'alésage 18.

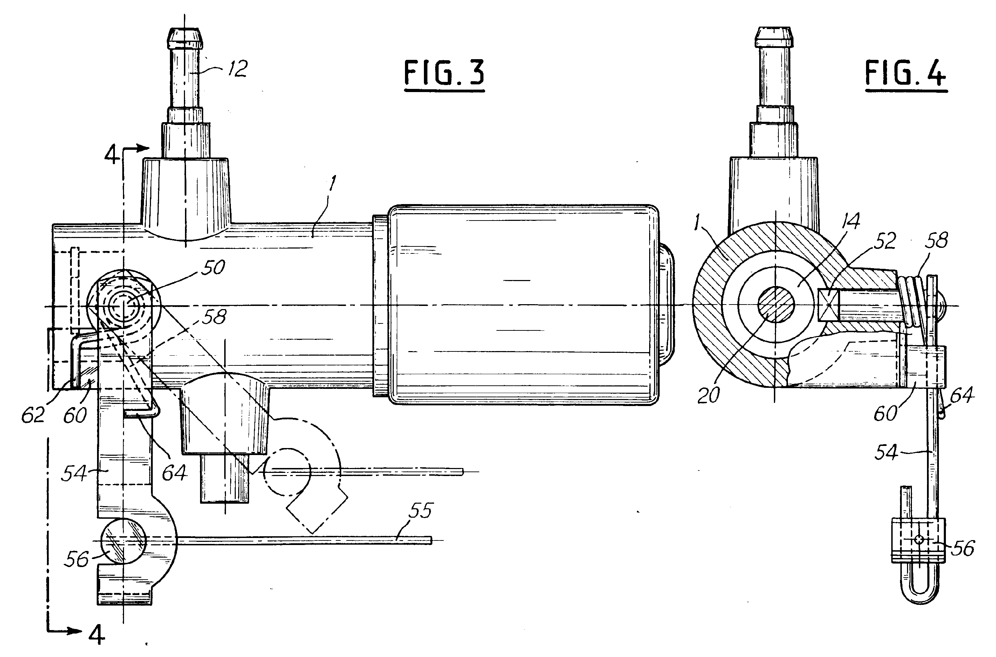

Selon une variante de réalisation, la cylindrée de la pompe, c'est-à-dire la variation de volume de la chambre de pompage 18, peut être réglée en remplaçant l'une au moins des butées 26 et 30 de limitation du déplacement du piston 20 par une butée réglable. Par exemple, comme représenté sur les Fig.3 et 4, une tige 50 est montée radialement dans le corps 1 de la pompe. Cette tige est libre de tourner autour de son axe propre dans le corps de la pompe 1, et son extrémité située à l'intérieur de la cavité 24 est découpée de façon à former un plat 52 de contact avec la collerette 22 du piston 20. Ainsi, selon la position angulaire de la tige 50 dans le corps 1, le point de contact entre la collerette 22 et la butée formée par le plat 52 a une position variable par rapport à la butée 30, ce qui entraîne une modification de la variation du volume de la chambre de pompage et par suite du débit de la pompe.

De préférence, la tige 50 est solidaire d'un levier de commande 54 qui est, par exemple, relié à une tige de manoeuvre 55 par une articulation à rouleau 56. Un ressort de rappel 58 est monté entre un doigt 60 solidaire du corps 1 et le levier 54. Ce ressort est de préférence formé par un fil enroulé autour de la tige 50 et ayant une extrémité 62 fixée sur le doigt 60 tandis que son extrémité opposée 64 est emboîtée sur le bord du levier 54 opposé à ce doigt. Ce ressort rappelle à tout moment le levier 54 vers sa position neutre, c'est-à-dire la position dans laquelle le plat 52 arrête la collerette 22 au niveau de l'épaulement 26 de la cavité 24. Il apparaîtra toutefois clairement que le levier 54 peut être bloqué dans toutes autres positions pour assurer un débit différent.

De même, si nécessaire, la pompe peut être enfermée dans une sorte de sac ou tamis à mailles fines lorsqu'elle est immergée dans le fluide à pomper. Le tube de refoulement et les fils d'alimentation traversent ce sac ou tamis mais la pompe est efficacement protégée contre la pénétration éventuelle d'impuretés contenues dans le liquide.

Bien entendu, la commande électrique formée par l'électro-aimant 42 peut être remplacée par toute autre commande appropriée, électrique ou mécanique, la pompe pouvant être utilisée pour des fluides divers.

La commande par électro-aimant est toutefois particulièrement appropriée pour les pompes de graissage de moteur à deux temps, montées dans le réservoir lui-même.

## Revendications

1. Pompe à faible débit, notamment pour le graissage d'un moteur à deux temps, du type comprenant : un corps cylindrique creux (1) ayant deux orifices latéraux espacés axialement (2, 4), respectivement d'aspiration et de refoulement ; à l'intérieur de ce corps (1), un tiroir de distributeur (14) et un piston cylindrique (20) monté dans ce tiroir, le tiroir et le piston ménageant entre eux une chambre de pompage (18) et étant mobiles en va-et-vient par rapport au corps (1) et l'un par rapport à l'autre, le corps comportant des butées (26, 30, 52) d'arrêt du piston (20) dans deux positions extrêmes qui sont séparées par une distance inférieure à la course du tiroir (14) ; et des moyens (36, 40) d'actionnement du tiroir, caractérisée en ce que les fins de course du tiroir (14) sont définies par la butée de ce tiroir d'une part contre une surface (45A) solidaire du corps (1), et d'autre part contre un élément (22) solidaire du piston.

2. Pompe suivant la revendication 1, caractérisée en ce que le tiroir (14) est en simple appui, à son extrémité opposée au piston (20), contre un organe d'actionnement (40) vers lequel il est sollicité par un ressort (30).

3. Pompe suivant l'une des revendications 1 et 2, caractérisée en ce que le tiroir (14) est en contact, à son extrémité opposée au piston, avec le noyau (40) d'un électro-aimant (42) agissant à l'encontre d'un ressort de rappel (36).

4. Pompe suivant l'une quelconque des revendications 1 à 3, caractérisée en ce que le tiroir de distributeur (14) a une forme cylindrique, est en contact avec la face interne du corps (1) et comporte un évidement borgne (18) de réception du piston (20).

5. Pompe suivant l'une quelconque des revendications 1 à 4, caractérisée en ce que le piston (20) comporte une collerette (22) de coopération avec les butées (26, 30, 52) du corps (1), cette collerette constituant ledit élément.

6. Pompe suivant l'une quelconque des revendications 1 à 5, caractérisée en ce que l'une au moins des butées (52) est réglable.

7. Pompe suivant la revendication 6, caractérisée en ce que la butée réglable est formée par une tige radiale (50) terminée par un plat (52) et susceptible de pivoter autour de son axe dans le corps (1).

8. Pompe suivant l'une des revendications 6 et 7, caractérisée en ce que la butée réglable est commandée par un levier pivotant extérieur (54).

## Patentansprüche

1. Pumpe für kleine Mengen, insbesondere für die Schmierung einer Zweitaktbrennkraftmaschine, die folgendes aufweist: einen zylindrischen Hohlkörper (1) mit zwei seitlichen in axialem bestand angeordneten Öffnungen (2, 4), jeweils für die Ansaugung und Förderung, und im Inneren des Hohlkörpers (1) einen Verteilerschieber (14) und einen Zylinderkolben (20), der in dem Verteilerschieber angeordnet ist, wobei der Verteilerschieber und der Zylinderkolben miteinander eine Pumpenkammer (18) bilden und in Bezug auf den Hohlkörper (1) jeweils hin- und herbeweglich sind, und in der der Hohlkörper Widerlager (26, 30, 52) für den Anschlag des Zylinderkolbens .(20) in zwei Extremstellungen aufweist, die untereinander einen bestand aufweisen, der kleiner ist, als der Hub des Verteilerschiebers (14), und in der Mittel (36, 40) für die Betätigung des Verteilerschiebers vorgesehen sind, **dadurch gekennzeichnet, daß** die Hubbegrenzungen des Verteilerschiebers (14) durch den beschlag des Verteilerschiebers an einer mit dem Hohlkörper (1) fest verbundenen Fläche (45A) einerseits und an einem mit dem Zylinderkolben fest verbundenen Element (22) andererseits definiert werden.

2. Eine Pumpe nach Anspruch 1, **dadurch gekennzeichnet, daß** der Verteilerschieber (14) an seinem dem Zylinderkolben (20) gegenüberliegenden Ende durch einfache Auflage mit einem Betätigungsorgan (40) verbunden ist, gegen das er durch eine Feder (30) bewegt wird.

3. Eine Pumpe nach einem der Ansprüche 1 oder 2, **dadurch gekennzeichnet, daß** der Verteilerschieber (14) an seinem dem Zylinderkolben gegenüberliegenden Ende mit dem Kern (40) eines Magnetventils (42) in Verbindung steht, das gegen eine Rückzugfeder (36) wirkt.

4. Eine Pumpe nach einem der Ansprüche 1 bis 3, **dadurch gekennzeichnet, daß** der Verteilerschieber (14) eine zylindrische form aufweist, mit der Innenfläche des Hohlkörpers (1) in Berührung steht und mit einem Blindloch (18) für die Aufnahme des Zylinderkolbens (20) versehen ist.

5. Eine Pumpe nach einem der Ansprüche 1 bis 4, **dadurch gekennzeichnet, daß** der Kolben (20) einen Bund (22) aufweist, der mit den Widerlagern (26, 30, 52) des Hohlkörpers (1) zusammenwirkt, wobei dieser Bund das genannte Element bildet.

6. Eine Pumpe nach einem der Ansprüche 1 bis 5, **dadurch gekennzeichnet, daß** mindestens eines der Widerlager (52) verstellbar ist.

7. Eine Pumpe nach Anspruch 6, **dadurch gekennzeichnet, daß** das verstellbare Widerlager durch ein in einer Abflachung (52) endendes radiales Gestänge (50) gebildet wird, und sich in dem Hohlkörper (1) um seine Achse drehen kann.

8. Eine Pumpe nach einem der Ansprüche 6 und 7, **dadurch gekennzeichnet, daß** das verstellbare Widerlager durch einen äußeren Schwenkhebel (54) betätigt wird.

## Claims

1. Low-delivery-rate pump, especially for the lubrication of a two-stroke engine, of the type comprising: a hollow cylindrical body (1) having two axially spaced lateral ports (2, 4), respectively suction and discharge ports; on the inside of this body (1), a dispensing slide valve (14) and a cylindrical piston (20) mounted in this slide valve, the slide valve and the piston providing between them a pumping chamber (18) and being able to move to and fro in relation to the body (1) and in relation to each other, the body comprising stops (26, 30, 52) for stopping the piston (20) in two extreme positions which are separated by a distance less than the travel of the slide valve (14); and means (36, 40) for actuating the slide valve, characterised in that the travel limits of the slide valve (14) are defined by the stop of this slide valve on the one hand against a surface (45A) integral with the body (1), and on the other hand against an element (22) integral with the piston.

2. Pump according to Claim 1, characterised in that the slide valve (14), at its end opposite the piston (20), bears simply against an actuating component (40) towards which it is urged by a spring (30).

3. Pump according to either one of Claims 1 and 2, characterised in that the slide valve (14) is in contact, at its end opposite the piston, with the core (40) of an electromagnet (42) acting in opposition to a return spring (36).

4. Pump according to any one of Claims 1 to 3, characterised in that the dispensing slide valve (14) has a cylindrical shape, is in contact with the internal face of the body (1) and comprises a blind hollowed-out region (18) for receiving the piston (20).

5. Pump according to any one of Claims 1 to 4, characterised in that the piston (20) comprises a flange (22) for cooperating with the stops (26, 30, 52) of the body (1), this flange constituting the said element.

6. Pump according to any one of Claims 1 to 5, characterised in that at least one (52) of the stops is adjustable.

7. Pump according to Claim 6, characterised in that the adjustable stop is formed by a radial pin (50) terminated by a flat (52) and capable of pivoting about its axis in the body (1).

8. Pump according to either one of Claims 6 and 7, characterised in that the adjustable stop is controlled by an exterior pivoting lever (54).

EP 0 376 815 B1

FIG.1

FIG.2

FIG.4

FIG.3